Europäisches Patentamt

European Patent Office

Office européen des brevets

(11) Veröffentlichungsnummer: **0 216 752**
**A2**

## (12) EUROPÄISCHE PATENTANMELDUNG

(21) Anmeldenummer: 86890260.2

(22) Anmeldetag: 19.09.86

(51) Int. Cl.⁴: **B 62 D 55/10**
**B 62 D 21/11**

(30) Priorität: 23.09.85 AT 2774/85

(43) Veröffentlichungstag der Anmeldung:
01.04.87 Patentblatt 87/14

(84) Benannte Vertragsstaaten:
CH DE FR IT LI SE

(71) Anmelder: **Bombardier-Rotax-Wien Produktions- und
Vertriebsgesellschaft m.b.H.
Donaufelder Strasse 73-79
A-1210 Wien (AT)**

(72) Erfinder: **Ranner, Dietrich, Dipl.-Ing.
Schwalghofen-Egg
A-5301 Eugendorf Salzburg (AT)**

(74) Vertreter: **Krause, Ernst, Dipl.-Ing. et al
Dipl.- Ing. Krause, Ernst Dipl. Ing. Casati, Wilhelm
Patentanwälte Amerlingstrasse 8
A-1061 Wien (AT)**

(54) Raupenfahrzeug.

(57) Die Erfindung betrifft ein Raupenfahrzeug, bei dem ein Motor, Getriebe, Fahrerhaus und gegebenenfalls eine Ladefläche umfassender Geräterahmen (20) über mehrere elastische Lager (15, 16) leicht lösbar, mit dem Fahrwerksrahmen verbunden ist (Fig. 1).

FIG. 1

Bundesdruckerei Berlin

**Beschreibung**

Raupenfahrzeug

Die Erfindung betrifft ein Raupenfahrzeug mit einem Fahrwerksrahmen, an dem die Räder bzw. Laufrollen angelenkt sind und vom Fahrwerksrahmen zu tragenden Geräten, zu denen Motor, Getriebe, Fahrerkabine, gegebenenfalls eine Ladefläche gehören.

Bei Raupenfahrzeugen schwerer Bauart ist es üblich, eine verwindungssteife Wanne auszubilden, an der die Laufrollen (Räder) des Fahrwerks meist über Drehstabfedern angelenkt sind. Wegen des hohen Gewichtes solcher Fahrzeuge wird bei Pistenfahrzeugen die Wanne durch eine Rahmenkonstruktion ersetzt, welche jedoch meist ebenfalls verwindungssteif ausgeführt wird. Diese Konstruktion hat den Nachteil, daß Kräfte, welche aus dem Fahrbetrieb über das Fahrwerk in die Rahmenkonstruktion eingeleitet werden, dort zu hohen Spannungen führen, welche meist die Lebensdauer dieser Konstruktionen begrenzen.

Der Erfindung liegt die Aufgabe zugrunde, diesen Nachteil, insbes. für Pistenfahrzeuge zu beseitigen. Erreicht wird dies, wenn gemäß der Erfindung die Geräte mittels eines Rahmens zu einer Konstruktionseinheit zusammengefaßt sind und der, insbes. verwindungsweich ausgebildete Fahrwerksrahmen über mehrere, insbes. drei, elastische Lager mit dem Geräterahmen verbunden ist. Im wesentlichen wird damit der eingangs erwähnte Mangel behoben, indem der Fahrwerksrahmen vom eigentlichen Geräterahmen getrennt wird und der Geräterahmen mit dem Fahrwerksrahmen über ein gummielastisches Dreipunktlager verbunden wird. Dadurch ist es möglich, den Fahrwerksrahmen vollkommen verwindungsweich auszubilden, sodaß er den von den Federn der Räder nicht mehr verkraftbaren Geländeunebenheiten folgen kann, ohne daß wesentliche Torsionskräfte in den zweckmäsigerweise als starre Konstruktion ausgeführten Geräterahmen eingeleitet werden. Der Geräterahmen wird deshalb als starre Konstruktion ausgebildet, da es Motor, Getriebe Fahrerkabine und Ladefläche trägt.

Die Erfindung bietet den weiteren Vorteil, daß mit wenigen zu lösenden Schrauben die beiden Fahrzeugelemente getrennt werden können, sodaß beispielsweise ein Winterfahrwerk (Pistengerätefahrwerk) gegen ein Sommerfahrwerk (Kettenfahrwerk ähnlich militärischer Panzerfahrzeuge) ausgetauscht werden kann.

In besonderer Ausgestaltung der Erfindung kann vorgesehen werden, daß der Fahrwerksrahmen als Leiterrahmen ausgebildet ist, dessen zueinander parallele Holme durch in dem Holmen schwenkbar gelagerte Wellen verbunden sind, wobei gegebenenfalls Federschwingen bzw. Wippen für die Tragräder der Raupen, an den Wellen gelagert sind. Es stellt dies eine hinsichtlich des Torsionsverhaltens des Fahrwerksrahmens besonders günstige Ausführung dar.

Um ein gegenseitiges Verschieben der Holme zu verhindern, ist es besonders zweckmäßig, wenn im Bereich zwischen den Holmen jede Welle von einem Rohr umschlossen ist, wobei an dem einen Rohr ein aus bevorzugt verwindungsweichen U-Profilen bestehender Dreieckslenker mit seiner Basis verankert ist, wobei der Spitzenbereich des Dreieckslenkers an einer elastischen, insbes. aus Gummi bestehenden, am anderen Rohr, bevorzugt mittig angeordneten, Lagerung, z.B. mittels eines Gelenksbolzens gehalten ist. Durch diese Ausgestaltung werden Kantenpressungen in den Wellenlagerungen in den Holmen vermieden.

Zum Anschluß des Gehäuserahmens an den Fahrwerksrahmen kann in Weiterbildung der Erfindung der Fahrwerksrahmen in einer im wesentlichen senkrecht zu den Holmen verlaufenden Ebene, voneinander beabstandet, zwei Gummilager, insbes. in Form von in Gummi eingebetteten Lagerbuchsen für den Eingriff von Laschen des Geräterahmens durchsetzenden Bolzen, und weiters bevorzugt in der Längsmittenebene des Fahrwerksrahmens, ein weiteres (drittes) elastisches Lager für den Geräterahmen aufweisen. Die Bolzenachse verläuft hiebei in bevorzugter Weise parallel zu den Holmen des Leiterrahmens.

Für die Kräfteeinleitung vom Fahrwerksrahmen in den Geräterahmen ist eine Anordnung besonders zweckmäßig, bei der die Gummilager symmetrisch zur Längsmittenebene des Fahrwerksrahmens angeordnet sind.

Eine weitere Ausgestaltung des erfindungsgemäßen Raupenfahrzeuges zeichnet sich dadurch aus, daß das am Fahrwerksrahmen befindliche weitere (dritte) elastische Lager für die Abstützung des Geräterahmens auf einer drehelastisch an einer Sprosse des Leiterrahmens gelagerten Konsole ausgebildet ist. Die Konsole ermöglicht hiebei eine besonders günstige Möglichkeit für die Schaffung des Auflagers für den Geräterahmen. Hiebei erweist es sich als vorteilhaft, wenn die Konsole eine im wesentlichen horizontale Auflagefläche für einen am Geräterahmen befestigten Flansch besitzt, wobei zur Verbindung, gegebenenfalls die Auflagefläche und den Flansch durchsetzende Schrauben vorgesehen sind.

Eine konstruktive Vereinfachung ergibt sich, wenn die Konsole ein Lagerauge besitzt, in das die elastische Lagerung (Gummibüchse) eingreift, an der der Spitzenbereich des Dreiecklenkers des Fahrzeugrahmens verankert ist. Die für den Dreiecklenker vorgesehenen Mittel für dessen elastische Lagerung dienen dabei gleichzeitig auch für die elastische Lagerung des Geräterahmens hinsichtlich einer Lagerstelle des Geräterahmens.

Die Erfindung wird nachstehend anhand der Zeichnung beispielsweise näher erläutert. Es zeigen,

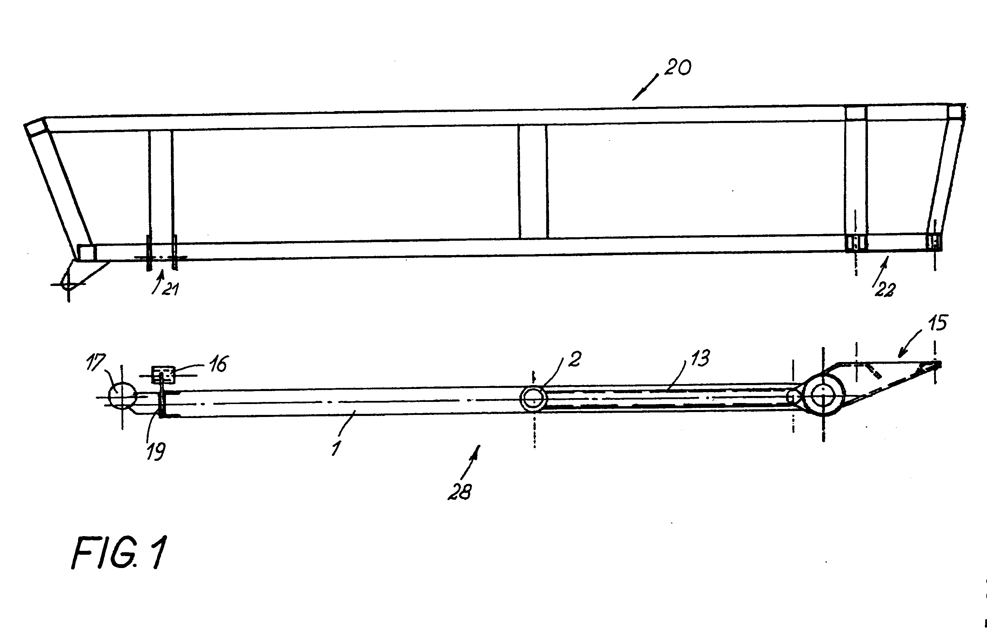

Fig. 1 in schematischer, auseinandergezogener Darstellung in Seitenansicht, den Fahrwerkrahmen und den Geräterahmen, wobei der Geräterahmen vom Fahrwerksrahmen abgehoben dargestellt ist, und

Fig. 2 in Draufsicht schematisch in einer Teildarstellung den Fahrwerksrahmen.

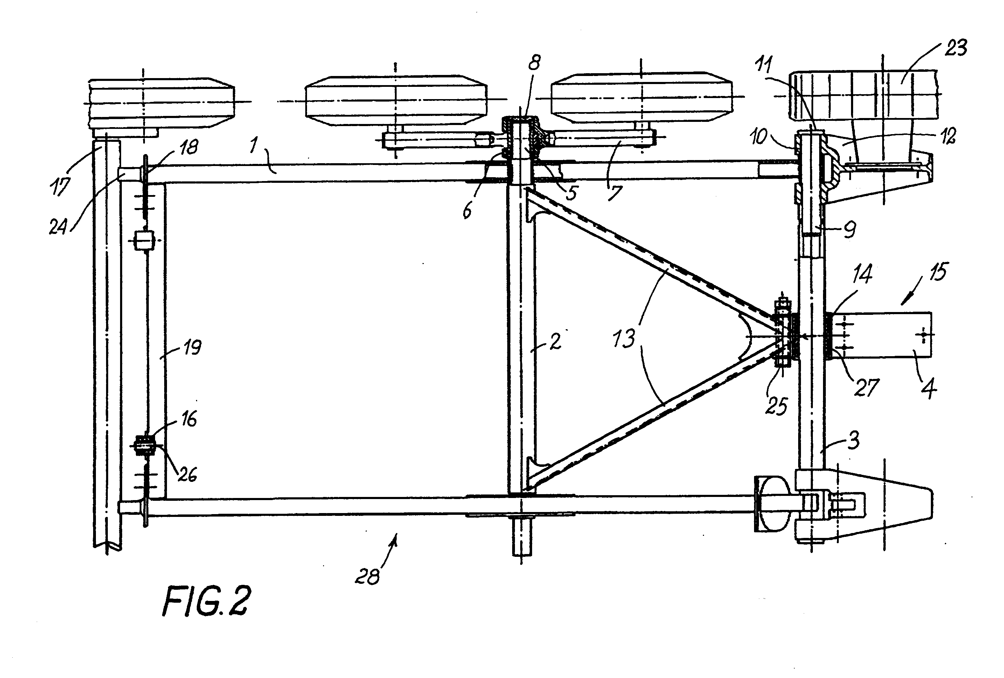

Der Fahrzeugrahmen 28 ist im dargestellten Ausführungsbeispiel, wie insbes. aus Fig. 2 ersichtlich, als Leiterrahmen ausgebildet, der aus zwei parallel zueinander angeordneten Holmen 1 besteht, zwischen welchen Sprossen angeordnet sind. Die Sprossen können dabei Wellen 5, 9 aufweisen, die in den Holmen 1 schwenkbar in Lagern 6, 10 aufgenommen und im Bereich zwischen den Holmen 1 von Rohren 2, 3 umschlossen sind. Die Welle 9 trägt eine Federschwinge 12, um ein Kettenrad 23 federnd zu lagern. Die Welle 5 trägt an ihren Enden Radwippen 7. Als dritte Sprosse 19 ist ein torsionweiches U-Profil vorgesehen, das an Laschen 18 angeschraubt ist, die an den Holmen 1 befestigt sind. Die Holme 1 können als Formrohre ausgebildet sein, so daß sie Einschubteile 24 aufnehmen können, an denen eine Spannachse 17 zum Spannen der Raupen befestigt werden kann.

Damit sich die Holme 1 gegeneinander nich verschieben können, wodurch in den Lagern 6 und 10 Kantenpressungen entstehen würden, ist an dem Rohr 2 ein Dreieckslenker 13 angebracht, welcher über einen Gelenkbolzen 25 im Bereich seiner Spitze mit einer elastischen, insbes. aus Gummi bestehenden Lagerung 14 verbunden ist. Die Lagerung 14 kann dabei als das Rohr 3 umschließende, am Rohr fixierte Gummibuchse ausgebildet sein. Die Streben des Dreiecklenkers 13 werden ebenfalls von verwindungsweichen U-Profilen gebildet. Eine um die Längsachse des Fahrwerkrahmens 28 auftretende Torsionsbeanspruchung führt zu Drehbewegungen in den Gelenken der Sprossen, ohne daß die bei starren Verbindungen üblichen Spannungen auftreten. Der Zusammenbau des Rahmens 28 erfolgt bei dieser Ausgestaltung so, daß die Holme 1 auf die Sprossen, nämlich die mit den Rohren 2, 3 versehenen Wellen 5, 9 aufgesteckt werden, wobei die Schwinge 12 miteingefädelt wird. Nach Aufsetzen der Fahrwerkswippen 7 wird durch die Montage von Deckscheiben 8 und 11, welche über Schrauben mit den Wellen 5 und 9 fest verbunden sind, ein Auseinanderfallen der Elemente verhindert. Als letzte Montagearbeit wird noch der Träger 19 mit den Laschen 18 verbunden.

Der Fahrwerksrahmen 28 besitzt symmetrisch zu seiner Längsmittenebene angeordnet, zwei Gummilager 16, die in Gummi eingebettete Lagerbüchsen zur Aufnahme von Bolzen aufweisen,die Laschen 21 des Geräterahmens 20 durchsetzen. In der Längsmittenebene des Fahrzeugrahmens 28 befindet sich ein drittes, elastisches Lager für den Geräterahmen 20, das auf einer drehelastisch an einer Sprosse des Leiterrahmens gelagerten Konsole 15 ausgebildet ist. Die Konsole 15 ist mit einer horizontal ausgerichteten Auflage 4 für einen Flansch 22 des Geräterahmens 20 versehen. Die Auflagefläche 4 und der Flansch 22 sind durch Schrauben verbindbar, wobei in Fig. 2 die Mitten der Bohrungen für die Aufnahme der Schrauben auf der Fläche 4 durch Kreuze angedeutet sind.

Die Konsole 15 besitzt ein Lagersauge 27, das über die elastische, von einer Gummibüchse gebildete Lagerung 14 für den Spitzenbereich des Dreiecklenkers 13 geschoben ist.

Zur Verbindung des Geräterahmens 20 mit dem Fahrwerksrahmen 28 werden die Laschen 21 des Geräterahmens 20 mit den Gummilagern 16 des Fahrwerksrahmens 28, welche an der Sprosse 19 befestigt sind, über Bolzen 26 verbunden. Der Flansch 22 wird mit der Konsole 15, die mit dem Gummielement 14 ein Lager bildet, verschraubt. Durch die Gummielemente 14 und 16 wird eine elastische Dreipunktlagerung gebildet, auf der der als Fachwerk ausgebildete und daher starre Geräterahmen 20 gelagert ist.

## Patentansprüche

1. Raupenfahrzeug mit einem Fahrwerksrahmen, an dem die Räder bzw. Laufrollen angelenkt sind und vom Fahrwerksrahmen zu tragenden Geräten, zu denen Motor, Getriebe, Fahrerkabine, gegebenenfalls eine Ladefläche gehören, dadurch gekennzeichnet, daß die Geräte mittels eines Rahmens zu einer Konstruktionseinheit zusammengefaßt sind und der, insbes. verwindungsweich ausgebildete Fahrwerksrahmen (28) über mehrere, insbes. drei, elastische Lager mit dem Geräterahmen (20) verbunden ist.

2. Raupenfahrzeug nach Anspruch 1, dadurch gekennzeichnet, daß der Fahrwerksrahmen (28) als Leiterrahmen ausgebildet ist, dessen zueinander parallele Holme (1) durch in den Holmen (1) schwenkbar gelagerte Wellen (5, 9) verbunden sind, wobei gegebenenfalls Federschwingen (12) bzw. Wippen (7) für die Tragräder der Raupen, an den Wellen (5, 9) gelagert sind.

3. Raupenfahrzeug nach Anspruch 2, dadurch gekennzeichnet, daß im Bereich zwischen den Holmen (1) jede Welle (5, 9) von einem Rohr (2, 3) umschlossen ist, wobei an dem einen Rohr (2) ein aus bevorzugt verwindungsweichen U-Profilen bestehender Dreieckslenker (13) mit seiner Basis verankert ist, wobei der Spitzenbereich des Dreieckslenkers (13) an einer elastischen, insbes. aus Gummi bestehenden, am anderen Rohr (3), bevorzugt mittig angeordneten, Lagerung (14), z.B. mittels eines Gelenkbolzens (25) gehalten ist.

4. Raupenfahrzeug nach einem der Ansprüche 1 bis 3, dadurch gekennzeichnet, daß der Fahrwerksrahmen (28) in einer im wesentlichen senkrecht zu den Holmen (1) verlaufenden Ebene, voneinander beabstandet, zwei Gummilager (16), insbes. in Form von in Gummi eingebetteten Lagerbuchsen für den Eingriff von Laschen (21) des Geräterahmens (20) durchsetzenden Bolzen, und weiters bevorzugt in der Längsmittenebene des Fahrwerksrahmens (28), ein weiteres (drittes) elastisches Lager für den Geräterahmen (20) aufweist.

5. Raupenfahrzeug nach Anspruch 4, dadurch gekennzeichnet, daß die Gummilager (16) symmetrisch zur Längsmittenebene des Fahrwerksrahmens angeordnet sind.

6. Raupenfahrzeug nach Anspruch 4 oder 5, dadurch gekennzeichnet, daß das am Fahrwerksrahmen befindliche weitere (dritte) elastische Lager für die Abstützung des Geräterahmens (20) auf einer drehelastisch an einer Sprosse des Leiterrahmens gelagerten Konsole (15) ausgebildet ist.

7. Raupenfahrzeug nach Anspruch 6, dadurch gekennzeichnet, daß die Konsole (15) eine im wesentlichen horizontale Auflagefläche (4) für einen am Geräterahmen (20) befestigten Flansch (22) besitzt, wobei zur Verbindung, gegebenenfalls die Auflagefläche (4) und den Flansch (22) durchsetzende Schrauben vorgesehen sind.

8. Raupenfahrzeug nach Anspruch 6 oder 7 und 3, dadurch gekennzeichnet, daß die Konsole (15) ein Lagerauge (27) besitzt, in das die elastische Lagerung (Gummibüchse) (14) eingreift, an der der Spitzenbereich des Dreiecklenkers (13) des Fahrzeugrahmens verankert ist.

**FIG. 1**

FIG.2